# EUROPÄISCHE PATENTSCHRIFT

(11) **EP 3 844 736 B1**
(45) Veröffentlichungstag und Bekanntmachung des Hinweises auf die Patenterteilung: **22.10.2025**
(21) Anmeldenummer: 19753320.1
(22) Anmeldetag: 09.08.2019
(51) Int. Cl.: G09B 23/28, G09B 23/30

(54) **REANIMATIONSPHANTOM**
RESUSCITATION DUMMY
MANNEQUIN DE RÉANIMATION

(30) Priorität: 28.08.2018 DE 102018120960
(43) Veröffentlichungstag der Anmeldung: 07.07.2021
(73) Patentinhaber: ResuSciTec GmbH, 79108 Freiburg (DE)
(72) Erfinder: DAMJANOVIC, Domagoj, 79108 Freiburg (DE); SCHERER, Christian, 79108 Freiburg (DE); POOTH, Jan-Steffen, 79108 Freiburg (DE); BRIXIUS, Sam Joé, 79108 Freiburg (DE)
(74) Vertreter: Rösler, Uwe
(86) Internationale Anmeldenummer: PCT/EP2019/071453
(87) Internationale Veröffentlichungsnummer: WO 2020/043465

(56) Entgegenhaltungen:
- WO-A2-2009/010898
- US-A1- 2008 131 855
- US-A1- 2015 279 237
- US-A1- 2017 076 635

## Beschreibung

### Technisches Gebiet

Die Erfindung bezieht sich auf ein Reanimationsphantom zum praktischen Training von Wiederbelebungsmaßnahmen, mit einem den menschlichen Rumpf nachbildenden Phantomkörper, in dem ein Fluidleitungssystem angeordnet ist, das den menschlichen Blutkreislauf schematisiert nachbildet und arterielle sowie venöse, dem menschlichen Abdomen und Leistenbereich zuordenbare Fluidleitungsabschnitte umfasst, die mit einer Pumpe fluidisch verbunden sind, wobei die Pumpe eine manuell betätigbare, mechanische Pumpe ist, die innerhalb des Phantomkörpers, der ein- oder mehrteilig ausgebildet ist, im Bereich des menschlichen Sternums angeordnet ist, der in diesem Bereich elastisch verformbar ist, und ein den menschlichen Kopf nachbildender Phantomkopf am Phantomkörper angebracht ist, mit einer mundartig ausgebildeten Öffnung, die mit einem die menschliche Lunge nachbildenden Beutel fluidisch verbunden ist.

Im Bereich der Reanimation haben die Ergebnisse der letzten Jahre gezeigt, dass die Reduktion der Zeitdauer unter Herz- und Kreislaufstillstand, d.h. No-Flow-Time, einen erheblichen Einfluss auf das Überleben und den neurologischen Therapieerfolg (Outcome) von Reanimationspatienten hat. Ein Minimum an No-Flow-Time kann nur dadurch erreicht werden, dass jeder der an Reanimationsmaßnahmen beteiligt ist, seine Rolle perfekt beherrscht und die Abläufe mit den Maßnahmen anderer Teammitglieder abgestimmt sind. Dies kann nur durch entsprechendes Training erfolgen. Mit der Erwähnung der extrakorporalen kardio-pulmonalen Reanimation in den aktuellen Leitlinien, erhält ein hochinvasives Verfahren Einzug in den erweiterten Reanimations-Algorithmus. Die Integration der Kanülierung während qualitativ hochwertiger konventioneller Reanimation mit minimaler No-flow-Time und der parallelen Durchführung aller erweiterten Reanimationsmaßnahmen stellt ganz neue Ansprüche an das Teamtraining und die damit verbundene Simulation. Ein Trainingsphantom soll die Möglichkeit zum Üben der Kanülierung als "Single Task"-Training beinhalten, aber auch die Abbildung der hochkomplexen Gesamtsituation erlauben.

### Stand der Technik

Bekannte Reanimationsphantome ermöglichen entweder das Üben der Reanimation, bspw. inklusive Intubation, Thoraxkompression, Legen von intravenösen Zugängen, Simulation der Defibrillation, etc., oder das Üben der reinen Kanülierung mit anschließendem Anschluss einer Pumpe an ein geschlossenes System.

Bekannte Reanimationsphantome zum Üben der reinen Reanimation sind bspw. in den Druckschriften EP 1 623 403 B1, EP 2 430 628 B1 oder in WO 1994/05000 A1 beschrieben und weisen typischerweise eine puppenhafte Nachbildung des menschlichen Oberkörpers mit Kopf auf, über dessen Mund- und Nasenöffnungen die künstliche Beatmung in kontinuierlichem Wechsel mit der Herzdruckmassage vorgenommen werden kann. Diese dem menschlichen Körper schematisiert nachgebildeten Modellpuppen sind derart konzipiert, so dass sie der jeweils an der Modellpuppe übenden Person einen möglichst realitätsnahen haptischen Eindruck bei der Durchführung der künstlichen Beatmung sowie der Herzdruckmassage zu vermitteln vermögen.

Die Druckschrift EP 1 230 634 B1 beschreibt eine Vorrichtung zur Simulation von Mund-zu-Mund-Beatmung und Herzdruckmassage, an der zusätzlich der Vorgang der Defibrillation geübt werden kann. Die puppenhafte Nachbildung des menschlichen Oberkörper- und Kopfbereiches weist hierzu an der nachgiebig ausgebildeten Brustplatte angebrachte Elektroden auf.

Ein bekanntes Reanimationsphantom zum Üben der Kanülierung ist der Druckschrift WO 2017/127724 A1 zu entnehmen und weist eine menschliche Körperattrappe auf, die den Oberkörper- und Leistenbereich umfasst. Innerhalb der vorwiegend aus Silikon bestehenden Körperattrappe sind den menschlichen arteriellen sowie auch venösen Blutkreislauf stark schematisiert nachbildende Fluidleitungen verlegt, die über einen Leistenabschnitt pumpengetrieben mit einem extrakorporalen Flüssigkeitsreservoir verbunden sind. Zum Zwecke der Punktion und Kanülierung sind im Brust-, Nacken- und dem rechten Leistenbereich sog. Kanülierungsfenster vorgesehen, unter denen die arteriellen sowie auch venösen Fluidleitungsabschnitte angeordnet sind. Mit der bekannten Simulationsvorrichtung kann die Punktion und das Einführen medizinischer Instrumente in das Fluidleitungssystem geübt und die sich durch die Kanülierung ergebenden Strömungsänderungen innerhalb des Fluidleitungssystems erkannt und überwacht werden.

Darüber hinaus ermöglichen derartige Trainingspuppen das Einüben von Kanülierungen zum Zwecke einer fluidischen Verbindung zu einem extrakorporalen Fluidkreislauf, längs dem bspw. eine extrakorporale Membranoxygenierungsmaschine (ECMO) enthalten sein kann. Derartige Reanimationsphantome sind in der Literatur sowie auch auf dem Markt als ECMO-Trainer bzw. ECMO-Reanimationspuppen bekannt.

Die Druckschrift US 2015/0279237 A1 offenbart ein Reanimationsphantom mit einer mechanischen Fluidpumpe sowie einem mit dieser fluidisch verbundenen Fluidleitungssystem, das über venöse sowie auch arterielle Fluidleitungsabschnitte verfügt. Zudem weist das Phantom einen Kopf mit Mundöffnung und fluidisch daran angeschlossene Lungenflügel auf. Insbesondere realisiert der Pumpenmechanismus die Funktion eines Mitralventil sowie eines Aortenventils.

Die Druckschrift WO 2009/010898 A2 beschreibt ein durchschallbares sowie auch punktierbares Phantom.

Die Druckschrift US 2008/0131855 A1 offenbart ein komplexes Phantom zum Einüben eines Geburtsvorganges, das u. a. über Sensoren und RFID-Chips verfügt.

Die Druckschrift US 2017/0076635 A1 offenbart ein Trainingsphantom begrenzt auf ein menschliches Glied.

### Darstellung der Erfindung

Der Erfindung liegt die Aufgabe zugrunde, ein Reanimationsphantom zum praktischen Training von Wiederbelebungsmaßnahmen, mit einem den menschlichen Rumpf nachbildenden Phantomkörper, in dem ein erstes Fluidleitungssystem angeordnet ist, das den menschlichen Blutkreislauf schematisiert nachbildet und arterielle sowie venöse, dem menschlichen Abdomen und Leistenbereich zuordenbare Fluidleitungsabschnitte umfasst, die mit einer Pumpe fluidisch verbunden sind, derart weiterzubilden, dass eine durchgängige Simulation sämtlicher Reanimationsszenarien an einem einzigen Reanimationsphantom durchgeführt werden sollen. Die möglichen Reanimationsszenarien sollen dabei folgende Maßnahmen umfassen:
Basic Life Support (BLS), umfassend Maßnahmen der Reanimation, wie bspw. Mund-zu-Mund-Beatmung bzw. Mund-zu-Nase-Beatmung sowie Herzdruckmassage, professionelle kardiopulmonale Reanimation (CPR) unter Einsatz mechanischer Reanimationshilfen, bspw. in Form mechanischer Systeme zur Ausübung einer Thoraxkompression, extrakorporale kardiopulmonale Reanimation (eCPR), umfassend die Implantation eines extrakorporalen Unterstützungssystems.

Die neuartige Reanimationspuppe soll ein Simulationstraining für alle an den Wiederbelebungsmaßnahmen teilhabenden Personen ermöglichen, d. h. Laien, Not-Ärzte, Kardiotechniker, Rettungsdienst- und weiteres medizinisches Fachpersonal.

Die Lösung der der Erfindung zugrunde liegenden Aufgabe ist im Anspruch 1 angegeben. Gegenstand der Ansprüche 10 und 11 sind jeweils ein System zum praktischen Trainieren von Wiederbelebungsmaßnahmen mit einem lösungsgemäßen Reanimationsphantom. Den Erfindungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen.

Das lösungsgemäße Reanimationsphantom nach den Merkmalen des Oberbegriffes des Anspruches 1 zeichnet sich dadurch aus, dass die mit dem ersten Fluidleitungssystem fluidisch verbundene Pumpe eine manuell betätigbare, mechanische Pumpe ist, die innerhalb des Phantomkörpers, der ein- oder mehrteilig ausgebildet ist, im Bereich des menschlichen Sternums angeordnet ist. Der Phantomkörper ist im Bereich des Sternums elastisch verformbar, um die Pumpe durch äußere Kraft- bzw. Druckausübung auf den Phantomkörper zu betätigen. Im Bereich des menschlichen Oberbauches sowie im Bereich der menschlichen rechten und/oder linken Leistengegend sieht der Phantomkörper jeweils eine Öffnung vor, unter denen jeweils wenigstens der arterielle oder venöse Fluidleitungsabschnitt des ersten Fluidleitungssystems abschnittsweise verläuft und in denen jeweils ein physisch schallbarer und punktierbarer Körper angeordnet bzw. eingesetzt ist. Zudem sind das erste Fluidleitungssystem sowie die Pumpe mit einem zweiten Fluidleitungssystem fluidisch verbunden, längs dem wenigstens eine fluidische Schnittstelle angeordnet ist, an der eine, fluidische Steuer- und/oder Regeleinheit zur Vorgabe und/oder Variation eines absoluten und/oder pulsatilen Fluidströmungsdruckes innerhalb des ersten Fluidleitungssystems verbunden ist.

Der am Phantomkörper fest oder abnehmbar fest angebrachte Phantomkopf dient mit der dort vorgesehenen mundartig ausgebildete Öffnung sowie optional zusätzlich vorgesehenen Nasenlochöffnungen zum Einüben einer Mund-zu-Mund-Beatmung bzw. Mund-zu-Nasen-Beatmung bzw. Masken-Beutel-Beatmung über eine Gesichtsmaske, die sich durch eine möglichst realistische Haptik im Hinblick auf den Beatmungswiderstand bei der Inspiration sowie der Rückstellkraft, die bei der Exspiration zum Tragen kommt, auszeichnet. Hierzu ist zumindest die mundartig ausgebildet Öffnung mit wenigstens einem die menschliche Lunge nachbildenden Beutel über wenigstens einen luftführenden Kanal verbunden. Zudem wird der durch die Beatmung erzeug- und erfahrbare Fülldruck des sich in den Bereich des Sternums innerhalb des Phantomkörpers, d. h. des Thoraxraumes, erstreckenden Beutels, der über den wenigstens einen luftführenden Kanal mit der mundartig ausgebildeten Öffnung sowie optional den Nasenlochöffnungen fluidisch verbunden ist, durch das innerhalb des Phantomkörpers vorhandene begrenzte Volumen mitbestimmt.

Die Nachbildung der mundartigen Öffnung und des luftführenden Kanals sind innerhalb des Phantomkopfes derart gestaltet, dass sie die oberen Atemwege bis unterhalb des Kehlkopfs anatomisch nachbilden, um so ein Einüben der Einführung von Atemwegshilfen, d.h. von verschiedenartigen Beatmungsschläuchen in den Rachen (Larynxmaske LM, Larynxtubus LT) oder über den Kehlkopf in die Luftröhre (Endotrachealtubus, ETT) jeweils ohne (LM, LT) oder mit (ETT) zusätzlichen Instrumenten (Laryngoskop), möglichst realitätsnah zu ermöglichen. Zu Zwecken einer Erfolgskontrolle können die Atemgeräusche über ein Stethoskop abgehört werden. Dieser Teilaufgabenabschnitt der Notfallversorgung, welcher über eine Mund-zu-Mund- oder Mund-zu-Nase-Beatmung oder die Beatmung mit aufgesetzter Gesichtsmaske und Beutel ("Beutel-Masken-Beatmung") hinausgeht, wird gemeinhin als erweitertes Atemwegsmanagement bezeichnet.

Bei Fehlen eines erweiterten Atemwegsmanagements ist überdies für eine technisch korrekte und erfolgreiche Durchführung einer Mund-zu-Mund-Beatmung bzw. Mund-zu-Nasen-Beatmung bzw. Masken-Beutel-Beatmung eine korrekte Kopf- und Halsposition notwendig, d.h. der Unterkiefer ist vorzuziehen (Unterkieferprotrusion) und der Kopf/Hals zu überstrecken (Reklination). Ein Fehlen dieser Maßnahmen kann eine erfolgreiche Beatmung unmöglich machen. Diese Bedingung ist im Phantomkopf über einen Blockademechanismus gelöst, der bei fehlender Reklination/ Unterkieferprotrusion den luftführenden Schlauch komprimiert.

Die auf der Höhe des Sternums innerhalb des Thoraxraumes des Phantomkörpers angebrachte mechanische Pumpe ist derart ausgebildet und angeordnet, so dass sie durch uniaxiale stoßartige Druckeinwirkung, bedingt durch eine vertikal von oben nach unten auf das Sternum eines rücklings horizontal liegenden Reanimationsphantoms gerichtete Kraft betätigbar ist und dabei einen haptisch erfahrbaren mechanischen Widerstand leistet, der weitgehend der Situation einer an einem Menschen durchführbaren Herzdruckmassage entspricht.

Somit umfasst das lösungsgemäße Reanimationsphantom sämtliche Einrichtungen zur Durchführung einer simulierten Beatmung sowie Herzdruckmassage.

Die manuell betätigbare, mechanische Pumpe vermag in Abhängigkeit ihrer Betätigung innerhalb des ersten Fluidleitungssystems einen gerichteten pulsatilen Systemfluss zu etablieren, der bei Nichtbetätigung der mechanischen Pumpe zum Erliegen kommt. Die mechanischen Eigenschaften der Pumpe, wie bspw. Kompressionstiefe, Druckpunkt, selbständig, entlastende Rückführung der Pumpe in den Ausgangszustand sowie auch die Bedienung der mechanischen Pumpe, d. h. der Frequenz der manuell auf die Pumpe einwirkenden Kompressionskraft, nehmen entscheidenden Einfluss auf den innerhalb des ersten Fluidleitungssystem generierten Systemfluss. Der Systemfluss innerhalb der arteriellen sowie venösen Fluidleitungsabschnitte des ersten Fluidleitungssystems lässt sich überdies mit Hilfe eines externen mobilen Ultraschallgerätes detektieren und durch entsprechende bildgebende Verfahren für die jeweils an oder mit dem Reanimationsphantom trainierenden Personen sichtbar und erlebbar machen.

Das Reanimationsphantom sieht zum Zwecke einer möglichst verlustfreien Ultraschallwellenkopplung an die arteriellen sowie venösen Fluidleitungsabschnitte des ersten Fluidleitungssystems im Bereich des menschlichen Oberbauches sowie im Bereich der menschlichen rechten und/oder linken Leistengegend Öffnungen vor, die jeweils mit einem physikalisch durchschallbaren Körper, bestehend vorzugsweise aus medizinischem synthetischen Gel, bedeckt bzw. gefüllt sind. Grundsätzlich eignen sich auch alternative Materialien zur Abdeckung bzw. Füllung der im Phantomkörper vorgesehenen Öffnungen, wie bspw. ballistische Gelatine oder ähnliches, die physisch durchschallbare Eigenschaften aufweisen. Ferner ist es überdies möglich, den vermittels der Pumpe innerhalb des ersten Fluidleitungssystems etabliertem pulsatilen Systemfluss haptisch anhand der taktil wahrnehmbaren Druckwellen über das medizinisch synthetische Gel bzw. ähnlich elastisches Material wahrzunehmen.

Die durschallbaren und punktierbaren Körper sind vorzugsweise intransparent, so dass sie die innerhalb des Phantomkörpers verlaufenden Fluidleitungsabschnitte für am Reanimationsphantom übende Personen unsichtbar abdecken.

Der Vorgang der Punktion sowie auch der nachfolgenden Kanülierung werden vorzugsweise ultraschallunterstützt durchgeführt, so dass die jeweilige Person den Umgang sowohl mit einem Punktions- bzw. Kanülierungsinstrument als auch mit einem Ultraschallkopf zur visuellen Darstellung des Injektions- bzw. Kanülierungsvorganges anhand eines Ultraschallbildes einüben kann.

Das Reanimationsphantom bietet hierzu die Möglichkeit, die Punktion und Kanülierung an wenigstens zwei unterschiedlichen Bereichen des Phantomkörpers durchzuführen, um auf diese Weise unterschiedliche Punktionssituationen sowie gegebenenfalls auch deren unmittelbare Auswirkung auf den Systemfluss erfahrbar zu machen. So lassen sich neben möglichst realitätsnahen Kanülierungserlebnissen insbesondere qualitative Aspekte der Reanimation und vor allem deren Interaktionen und Abhängigkeiten, wie bspw. die vorstehend bereits erwähnte Kompressionstiefe, Druckpunkt, Frequenz der Kompression, die alle einen entscheidenden Einfluss auf den Systemfluss haben, besser abbilden.

Die Verwendung eines mobilen Ultraschallgerätes, dessen Ultraschallkopf jeweils im Bereich der Öffnungen auf die Oberfläche eines der durchschallbaren Körper aufgesetzt wird, erzeugt Ultraschallschnittbilder von den jeweils unmittelbar unter oder in dem durchschallbaren Körper verlaufenden Fluidleitungsabschnitten, die es zu punktieren gilt.

In einem erweiterten Ausführungsbeispiel ist im Bereich wenigstens einer der Öffnungen eine elektrisch, magnetisch oder elektromagnetisch detektierbare Einheit innerhalb des Phantomkörpers angeordnet, vorzugsweise in Form eines RFID-Chips, um einerseits auf die Notwendigkeit eines echten Ultraschallgerätes verzichten zu können (der Punktionsvorgang wird in einem solchen Fall, getriggert durch die detektierbare Einheit, auf einem Ultraschall-Simulationsgerät virtuell dargestellt), und andererseits die Darstellung und Erfahrbarkeit weiterer intrakorporaler Bereiche des Reanimationsphantoms virtuell generieren und visuell darstellen zu können.

Insbesondere durch Nutzung der RFID-Technik können Herzbefunde, reversible Ursachen eines Herz-Kreislauf-Zustandes, Punktionsnadel- und/oder Kanülenfehllagen, Therapiesteuerungen etc. simuliert werden. So lässt sich mit Hilfe einer extern handhabbaren RFID-Antenne, die manuell im Bereich der Öffnungen oder anderer Körperregionen ("Regions of interest") über das Reanimationsphantom geführt wird, die als RFID-Chip ausgebildete detektierbare Einheit erfassen, von der beliebig bevorratete bzw. programmierbare Informationen abrufbar sind, und der betreffenden Person in geeigneter Weise visuell zur Darstellung gebracht werden können, beziehungsweise die eine solche visuelle Darstellung auf einem geeigneten Anzeigegerät triggern.

Vor allem aber ermöglicht das lösungsgemäß ausgebildete Reanimationsphantom das Einüben der Durchführung einer extrakorporalen kardiopulmonalen Wiederbelebung, kurz eCPR, die gemäß den Leitlinien aus dem Jahre 2015 dann zu berücksichtigen sind, wenn primäre Reanimationsbemühungen gescheitert sind oder spezielle Interventionen zur Behebung reversibler Ursachen notwendig sind.

Das Reanimationsphantom sieht hierzu wenigstens eine fluidische Schnittstelle längs des zweiten Fluidleitungssystems vor, an die sich ein extrakorporaler Fluidkreislauf fluidisch ankoppeln lässt, der die fluidische Steuer- und/oder Regeleinheit zur Vorgabe und/oder Variation eines absoluten und/oder pulsativen Fluidströmungsdruckes innerhalb des ersten Fluidleitungssystems vorsieht. Optional ist zusätzlich ein Flüssigkeitsreservoir und/oder eine Entgasungseinheit längs des zweiten Fluidleitungssystems vorgesehen.

Durch Vorsehen eines zum ersten Fluidleitungssystem parallel geschalteten zweiten Fluidleitungssystems, das mit einem offenen Reservoir oder mit einem steuer- bzw. regelbaren fluidischen Systems bspw. zur Simulation eines Patienten verbindbar ist, können zum einen verschiedene variable Drücke im gesamten Fluidleitungssystem, so insbesondere des ersten Fluidleitungssystem, längs dem die Punktierungs- und Kanülierungsbereiche enthalten sind, vorgegeben werden, zum anderen können realitätsnahe Reanimationsszenarien generiert und simuliert werden, die über den Zeitpunkt der Kanülierung hinausreichen. Durch Zuschalten einer fluidischen Steuer- und/oder Regeleinheit, über die der absolute und/oder pulsatile Fluidströmungsdruck innerhalb des ersten Fluidleitungssystems individuell vorgegeben werden kann, können gezielte medizinische Szenarien simuliert werden, die während einer Reanimation auftreten können. Insbesondere frühere Perfusionsphasen sowie auch primär kardiotechnisch problematisch handzuhabende Fallkonstellationen in der Handhabung der extrakorporalen Zirkulation, wie bspw. das Ansaugen der venösen Kanüle über Auftreten einer Vasoplegie, können auf diese Weise simuliert und eingeübt werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Draufsicht auf ein lösungsgemäß ausgebildetes Reanimationsphantom,
- Fig. 2: Darstellung des ersten und zweiten Fluidleitungssystems mit mechanischer Pumpe,
- Fig. 3: Fluidkupplungen mit modular auswechselbaren Fluidleitungsabschnitt.

### Wege zur Ausführung der Erfindung, gewerbliche Verwendbarkeit

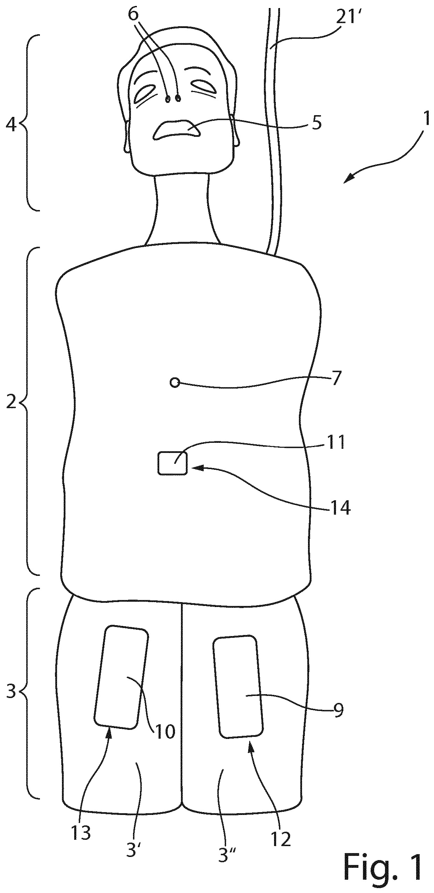

Figur 1 zeigt eine Draufsicht auf ein lösungsgemäß ausgebildetes Reanimationsphantom 1, das einen den menschlichen Rumpf nachbildenden Phantomkörper 2 sowie einen daran unmittelbar anschließenden Leistenbereich 3, der jeweils einen linken und rechten oberen Oberschenkelbereich 3', 3" umfasst. Am Schulterbereich des Phantomkörpers 2 ist ein Phantomkopf 4 angebracht, der über eine mundartig ausgebildete Öffnung 5 sowie zwei Nasenlochöffnungen 6 verfügt, die mit der mundartig ausgebildeten Öffnung 5 fluidisch verbunden sind.

Zum Zwecke der Durchführung einer möglichst realitätsnahen Mund-zu-Mund-Beatmung sind die mundartig ausgebildete Öffnung 5 sowie die Nasenlochöffnungen 6 über wenigstens einen im Inneren des Phantomkopfes 4 sowie Phantomkörper 2 verlaufenden Luftkanal mit einem die menschliche Lunge nachbildenden Beutel, der im Bereich des Sternums 7 angeordnet ist, fluidisch verbunden.

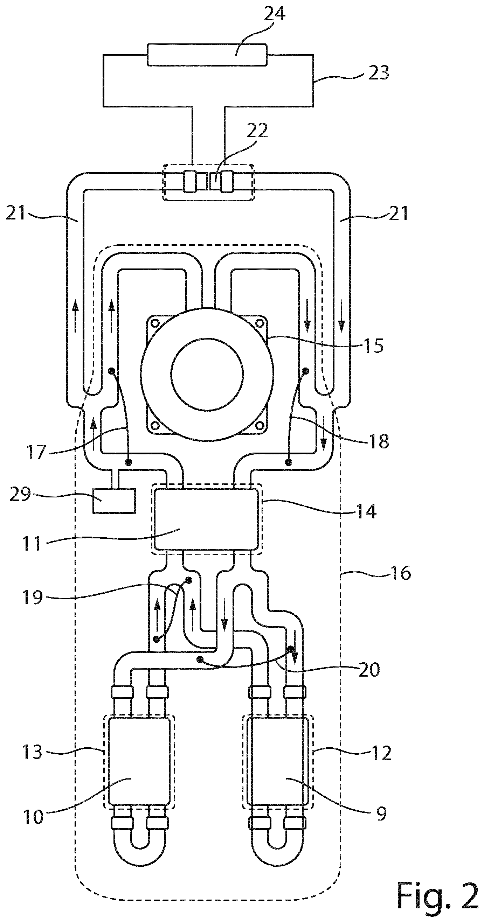

Bevor auf die in Figur 1 dargestellten, jeweils mit einem durchschallbaren sowie punktierbaren Körper 9, 10, 11 geschlossenen Öffnungen 12, 13, 14 innerhalb des Phantomkörpers 2 sowie der rechten und linken oberen Oberschenkelbereiche 3', 3" Bezug genommen wird, sei auf die Erläuterung des im Inneren des Reanimationsphantoms 1 angeordneten Fluidleitungssystems verwiesen, das in Figur 2 illustriert ist.

Figur 2 illustriert das innerhalb des Reanimationsphantoms angeordnete Fluidleitungssystem. Zentraler Bestandteil ist eine manuell betätigbare, mechanische Pumpe 15, die innerhalb des Phantomkörpers 2 im Bereich des menschlichen Sternums 7 angeordnet ist. Fluidisch mit der manuell betätigbaren Pumpe 15 ist ein erstes Fluidleitungssystem 16 verbunden, das in Figur 2 strichliert umrahmt ist. Das erste Fluidleitungssystem 16 bildet den menschlichen Blutkreislauf schematisiert nach und setzt sich aus venösen 17 und arteriellen 18, dem menschlichen Abdomen zuordenbaren Fluidleitungsabschnitten sowie venöse 19 und arterielle 20 dem menschlichen Leistenbereich zuordenbare Fluidleitungsabschnitte zusammen. Zum Zwecke der Punktierung und Kanülierung sind im Bereich des Abdomens jeweils unterhalb der aus Figur 1 entnehmbaren Öffnung 14 sowie im linken und rechten oberen Oberschenkelbereich 3', 3" jeweils unterhalb der in Figur 1 dargestellten Öffnungen 12, 13 möglichst nach Maßgabe der menschlichen Anatomie im Hinblick auf Form, Größe und relative räumliche Anordnung arterielle und venöse Fluidleitungsabschnitte angeordnet. In Figur 2 sind diese Bereiche durch die ebenfalls aus Figur 1 entnehmbaren durchschallbaren und punktierbaren Körper 9, 10, 11 überdeckt.

Bei Betätigung der Pumpe 15 wird längs des ersten Fluidleitungssystems 16 ein durch die aus Figur 2 entnehmbaren Pfeile orientierter Strömungsfluss eingeprägt, der ausgehend von der Pumpe 15 zunächst die arteriellen Fluidabschnitte 18, 20 und nachfolgend die venösen Fluidabschnitte 19, 17 durchströmt.

Im Bereich der venösen und arteriellen, dem Abdomen zuordenbaren Fluidleitungsabschnitte 17, 18 ist fluidisch ein zweites Fluidleitungssystem 21 fluidisch verbunden, das parallel zum ersten Fluidleitungssystem 16, ebenfalls gespeist und angetrieben durch die manuell betätigbare Pumpe 17 durchströmt wird. Längs des zweiten Fluidleitungssystems 21 ist eine fluidische Schnittstelle 22 eingebracht, an der ein extrakorporaler Fluidkreislauf 23 ankoppelbar ist. Längs des extrakorporalen Fluidkreislaufes 23 ist außerhalb des Reanimationsphantoms 1 wenigstens eine Komponente 24 der nachfolgenden Komponenten fluidisch ankoppelbar: Flüssigkeitsreservoir, fluidische Steuer- und/oder Regeleinheit zur Vorgabe und/oder Variation eines absoluten und/oder pulsatilen Fluidströmungsdruckes innerhalb des ersten Fluidleitungssystems, Entgasungseinheit, Patientensimulator.

Das in Figur 2 dargestellte zweite Fluidleitungssystem 21 ist in Figur 1 durch die vom Reanimationsphantom 1 weg- bzw. zuführenden Leitungen 21' angedeutet.

In Kenntnis des in Figur 2 illustrierten ersten und zweiten Fluidleitungssystems 16, 21 sowie der mit diesem fluidisch verbundenen, manuell betätigbaren mechanischen Pumpe 15 lassen sich an dem in Figur 1 gezeigten Reanimationsphantom 1 punktions- und Kanülierungsmaßnahmen in der folgenden Weise vornehmen:
Die Öffnungen 12, 13 und 14 sind vollständig mit den aus nicht transparentem Material bestehenden durchschall- und punktierbaren Körpern 9, 10, 11 bedeckt. Somit ist eine möglichst realitätsnahe Situation geschaffen. Zur genauen Ortung der zu punktierenden, unmittelbar unterhalb der Körper 9 bis 11 befindlichen Fluidleitungsabschnitte eignet sich vorzugsweise ein übliches mobiles Ultraschallgerät. Da die durchschallbaren Körper 9, 10, 11 vorzugsweise aus einem medizinischen synthetischen Gel bestehen, werden hierdurch kaum Artefakte oder Störungen in der Ultraschallortung hervorgerufen. Die mit der Punktion sowie auch Kanülierung befasste Person kann grundsätzlich im Bereich der Öffnungen 12 und 13 jeweils eine ultraschalwellenüberwachte Gefäßpunktion sowie Lagekontrolle von Draht und Kanülen vornehmen. Typischerweise erfolgt im Bereich der Öffnung 14 keine Punktion, vielmehr wird hier mit Hilfe eines Ultraschallkopfes die Lagekontrolle eines Führungsdrahtes vorgenommen, der nach einer Punktion im Bereich der Öffnungen 12, 13 platziert und längs der Fluidleitungen vorgeschoben wird.

Alternativ oder in Kombination mit der Durchführung einer ultraschallwellenüberwachten Punktion und Kanülierung kann im Bereich wenigstens einer der Öffnungen 12, 13, 14 ein RFID-Chip angeordnet sein, der von einem simulierten Schallkopf mit RFID-Antenne detektierbar ist. Anstelle eines Live-Bildes des jeweils von einem realen Ultraschallkopf erfassten Körperbereiches, kann mit Hilfe der RFID-Technik ein Ultraschallgerät simuliert werden und in Verbindung mit auf einem Datenträger bevorrateten Schnittbildern auf einem entsprechenden Sichtgerät zur visuellen Darstellung gebracht werden. Darüber hinaus können weitere RFID-Chips innerhalb des Phantomkörpers an geeigneten Stellen angebracht werden, wodurch eine Steigerung der Komplexität von medizinischen Übungsaufgabe, bspw. durch Hinzufügung komplexer Befundkonstellationen bzw. Pathologien möglich wird.

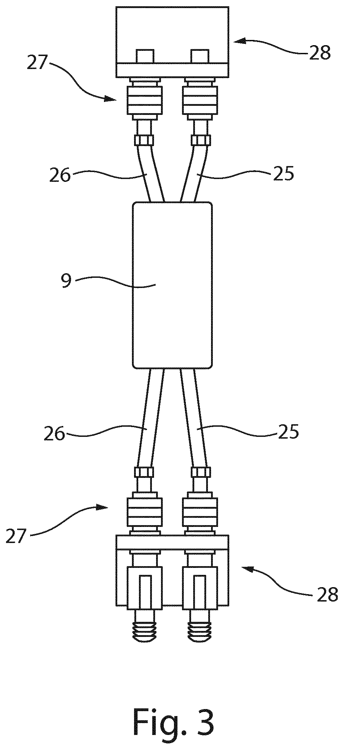

Um die Aufbereitung des Reanimationsmodells 1 zwischen mehrfachen Anwendungen möglichst kurz und einfach zu gestalten, gilt es, die punktierten und damit undicht gewordenen Fluidleitungsabschnitte möglichst schnell und einfach zu ersetzen. Figur 3 zeigt einen bevorzugten Aufbau für einen raschen modulartigen Austausch von punktierten Fluidleitungsabschnitten 25, 26, längs der ein durchschallbarer und punktierbarer Körper, vorzugsweise in Form eines medizinischen synthetischen Gel 9, 10 angeordnet ist. So lassen sich die punktierten Fluidleitungsabschnitte 25, 26 samt des Körpers bspw. 9, der die Fluidleitungsabschnitte matrixartig umgibt, über Kugelventil-Schnellkupplungen 27 vom übrigen Fluidleitungssystem abtrennen und durch neue Fluidleitungsabschnitte samt Körpers ersetzen.

Ein derartiger modularer Aufbau begünstigt zudem das erneute Entlüften nach einem Austausch der Punktionsstelle und begrenzt bzw. reduziert das Verbrauchsmaterial im Gebrauch des lösungsgemäßen Reanimationsphantoms auf ein Minimum.

Für eine benutzerfreundliche Handhabung sowie eine positionsfeste Arretierung der Schnellkupplungen 27 sowie auch eine damit verbundene ortsfest vorgegebene Positionierung der punktierbaren Fluidleitungsabschnitte 25, 26 sind die Schnellkupplungen 27 über entsprechende Halterungen 28 im Inneren des Phantomkörpers 1 befestigt.

In einer bevorzugten Ausführungsform sieht das Reanimationsphantom zu Seiten der venösen Fluidleitungsabschnitte ein elastisches Fluidreservoir 29 vor, um ein Kollabieren dieser venösen Fluidleitungsabschnitte während der Nutzung einer Reanimationshilfe zu verhindern und zusätzlich die Simulation eines zentral venösen Druckes (ZVD) in Kombination mit einer innerhalb des zusätzlichen extrakorporalen Kreislaufes 23 integrierten fluidischen Komponente 24 zu realisieren. Zudem wird dieses Reservoir 29 genutzt, um automatisch Luftblasen aus dem Fluidsystem zu eliminieren.

### Bezugszeichenliste

- 1: Reanimationsphantom
- 2: Phantomkörper
- 3: Leistenbereich
- 3': rechter oberer Oberschenkelbereich
- 3": linker oberer Oberschenkelbereich
- 4: Phantomkopf
- 5: mundartig ausgestaltete Öffnung
- 6: Nasenlochöffnung
- 7: Sternum
- 8: N.N.
- 9, 10, 11: durchschallbarer und punktierbarer Körper
- 12, 13, 14: Öffnung
- 15: manuell betätigbare Pumpe
- 16: erstes Fluidleitungssystem
- 17: venöser, dem Abdomen zuordenbarer Fluidleitungsabschnitt
- 18: arterieller, dem Abdomen zuordenbarer Fluidleitungsabschnitt
- 19: venöser, dem Leistenbereich zuordenbarer Fluidleitungsabschnitt
- 20: arterieller, dem Leistenbereich zuordenbarer Fluidleitungsabschnitt
- 21: zweites Fluidleitungssystem
- 21': Zu-, Ab-Leitung
- 22: fluidische Schnittstelle
- 23: extrakorporaler Flüssigkeitskreislauf
- 24: Komponente
- 25, 26: punktierbarer Fluidleitungsabschnitt
- 27: Schnellkupplung-Kugelkupplung
- 28: mechanische Halterung
- 29: elastisches Reservoir

## Patentansprüche

1. Reanimationsphantom (1) zum praktischen Training von Wiederbelebungsmaßnahmen, mit einem den menschlichen Rumpf nachbildenden Phantomkörper (2), in dem ein erstes Fluidleitungssystem (16) angeordnet ist, das den menschlichen Blutkreislauf schematisiert nachbildet und arterielle sowie venöse, dem menschlichen Abdomen und Leistenbereich (3) zuordenbare Fluidleitungsabschnitte (17, 18, 19, 20) umfasst, die mit einer Pumpe fluidisch verbunden sind, wobei die Pumpe (20) eine manuell betätigbare, mechanische Pumpe ist, die innerhalb des Phantomkörpers (2), der ein- oder mehrteilig ausgebildet ist, im Bereich des menschlichen Sternums (7) angeordnet ist, der in diesem Bereich elastisch verformbar ist, und ein den menschlichen Kopf nachbildender Phantomkopf (4) am Phantomkörper (2) angebracht ist, mit einer mundartig ausgebildeten Öffnung (5), die mit einem die menschliche Lunge nachbildenden Beutel fluidisch verbunden ist,
**dadurch gekennzeichnet, dass** der Phantomkörper (2) im Bereich des menschlichen Oberbauches sowie im Bereich der menschlichen rechten und/oder linken Leistengegend (3) jeweils eine Öffnung (12, 13, 14) vorsieht, unter der jeweils wenigstens der arterielle oder venöse Fluidleitungsabschnitt (117, 18, 19, 20) abschnittsweise verläuft und in der ein physisch schallbarer und punktierbarer Körper (9, 10, 11) angeordnet ist, und
dass das erste Fluidleitungssystem (16) und die Pumpe (15) mit einem zweiten Fluidleitungssystem (21) fluidisch verbunden sind, längs dem wenigstens eine fluidische Schnittstelle (22) angeordnet ist, an der eine, fluidische Steuer- und/oder Regeleinheit (24) zur Vorgabe und/oder Variation eines absoluten und/oder pulsatilen Fluidströmungsdruckes innerhalb des ersten Fluidleitungssystems (16) verbunden ist.

2. Reanimationsphantom nach Anspruch 1, dass wenigstens im Bereich einer der Öffnungen (12, 13,14) innerhalb des Phantomkörpers (2) eine elektrisch, magnetisch oder elektromagnetisch detektierbare Einheit implementiert ist.

3. Reanimationsphantom nach Anspruch 2, dass die Einheit ein RFID-Chip ist, der von einer extern handhabbaren RFID-Antenne detektierbar ist.

4. Reanimationsphantom nach einem der Ansprüche 1 bis 3, dass der physisch schallbare und punktierbare Körper (9, 10, 11) medizinisches synthetisches Gel aufweist.

5. Reanimationsphantom nach einem der Ansprüche 1 bis 4, dass die venösen und/oder arteriellen Fluidleitungsabschnitte (17, 18, 19, 20) den physisch schallbaren und punktierbaren Körper (9, 10, 11) durchdringen.

6. Reanimationsphantom nach einem der Ansprüche 1 bis 5, dass beabstandet längs des arteriellen und/oder venösen Fluidleitungsabschnittes (17, 18, 19, 20) zueinander zwei Fluidkupplungen (27) derart angeordnet sind, sodass der Fluidleitungsabschnitt (17, 18, 19, 20) abschnittsweise im Bereich einer der Öffnungen (12, 13, 14) ersetzbar ist.

7. Reanimationsphantom nach Anspruch 6, dass die Fluidkupplungen (27) fest oder lösbar fest mit dem Phantomkörper (2) verbunden sind.

8. Reanimationsphantom nach einem der Ansprüche 1 bis 7, dass der Phantomkopf (4) fest oder abnehmbar fest am Phantomkörper (2) angebracht ist, und
dass sich der die menschliche Lunge nachbildende Beutel in den Bereich des Sternums (7) innerhalb des Phantomkörpers (2) erstreckt und von diesem derart begrenzend umfasst ist, dass beim Beatmen eine realistische Haptik betreffend eines Beatmungswiderstandes sowie einer Rückstellkraft in Abhängigkeit eines Fülldruckes innerhalb des Beutels nachbildbar sind.

9. Reanimationsphantom nach einem der Ansprüche 1 bis 8, dass das zweite Fluidleitungssystem (21) fluidisch mittel- oder unmittelbar mit der Pumpe (15) sowie parallel zum ersten Fluidleitungssystem (16) verbunden ist, und
dass das zweite Fluidleitungssystem (21) einen ausserhalb des Phantomkörpers (2) verlaufenden Fluidleitungsabschnitt aufweist, längs dem die fluidische Schnittstelle (22) angeordnet ist.

10. System zum praktischen Trainieren von Wiederbelebungsmaßnahmen mit einem Reanimationsphantom (1) nach einem der Ansprüche 1 bis 9,
**dadurch gekennzeichnet, dass** ein diagnostischer Ultraschallkopf vorgesehen ist, dessen Ultraschallwellen den physisch schallbaren und punktierbaren Körper zu durchschallen und den arteriellen und/oder venösen Fluidleitungsabschnitt (17, 18, 19, 20) zu detektieren vermögen, und
dass mittels einer Punktionsnadel der detektierte Fluidleitungsabschnitt durch den physisch schallbaren und punktierbaren Körper hindurch punktierbar ist.

11. System zum praktischen Trainieren von Wiederbelebungsmaßnahmen mit einem Reanimationsphantom (1) nach einem der Ansprüche 3 bis 9,
**dadurch gekennzeichnet, dass** ein Detektor zur Detektion der elektrisch, magnetisch oder elektromagnetisch detektierbaren Einheit vorgesehen ist, und
dass der Detektor mittel- oder unmittelbar mit einer Ausgabeeinheit zur visuellen, akustischen und/oder haptisch wahrnehmbaren Darstellung von zwischen dem Detektor und der detektierbaren Einheit übermittelten Informationen verbunden ist.

## Claims

1. A resuscitation dummy (1) for the practical training of resuscitation measures, comprising a dummy body (2), which models the human torso and in which a first fluid line system (16) is arranged, which models the human blood circulation system in schematised form and comprises arterial and venous fluid line portions (17, 18, 19, 20) that can be associated with the human abdomen and groin area (3) and that are fluidically connected to a pump, wherein the pump (20) is a mechanical pump that can be manually actuated and that is arranged within the dummy body (2), which is formed from one or more parts, in the area of the human sternum (7), the dummy body being elastically deformable in said area, and a dummy head (4) which models the human head is attached to the dummy body (2), with a mouth-like opening (5), which is fluidically connected to a bag modelling the human lung,
**characterised in that** the dummy body (2) has one opening (12, 13, 14) each in the area of the human upper abdomen and in the area of the human right and/or left groin region (3), under each of which openings at least the arterial or venous fluid line portion (17, 18, 19, 20) partly runs and in each of which openings a body (9, 10, 11) that can be physically examined sonographically and punctured is arranged, and
**in that** the first fluid line system (16) and the pump (15) are fluidically connected to a second fluid line system (21), along which at least one fluidic interface (22) is arranged, to which a fluidic open-loop and/or closed-loop control unit (24) for presetting and/or varying an absolute and/or pulsatile fluid flow pressure within the first fluid line system (16) is connected.

2. The resuscitation dummy according to claim 1, **characterised in that** an electrically, magnetically or electromagnetically detectable unit is implemented at least in the area of one of the openings (12, 13, 14) within the dummy body (2).

3. The resuscitation dummy according to claim 2, **characterised in that** the unit is an RFID chip which is detectable by an externally manageable RFID antenna.

4. The resuscitation dummy according to any one of claims 1 to 3, **characterised in that** the body (9, 10, 11) that can be physically examined sonographically and punctured comprises medicinal synthetic gel.

5. The resuscitation dummy according to any one of claims 1 to 4, **characterised in that** the venous and/or arterial fluid line portions (17, 18, 19, 20) penetrate the body (9, 10, 11) that can be physically examined sonographically and punctured.

6. The resuscitation dummy according to any one of claims 1 to 5, **characterised in that** two fluid couplings (27) are arranged at a distance from one another along the arterial and/or venous fluid line portion (17, 18, 19, 20) in such a way that the fluid line portion (17, 18, 19, 20) can be replaced section by section in the region of one of the openings (12, 13, 14).

7. The resuscitation dummy according to claim 6, **characterised in that** the fluid couplings (27) are fixedly or releasably connected to the dummy body (2).

8. The resuscitation dummy according to any one of claims 1 to 7, **characterised in that** the dummy head (4) is attached fixedly or removably fixedly to the dummy body (2), and
**in that** the bag modelling the human lung extends into the region of the sternum (7) inside the dummy body (2) and is surrounded so as to be delimited thereby in such a way that, during resuscitation, realistic haptics can be modelled with regard to resuscitation resistance and a restoring force as a function of a filling pressure inside the bag.

9. The resuscitation dummy according to any one of claims 1 to 8, **characterised in that** the second fluid line system (21) is fluidically connected indirectly or directly to the pump (15) and parallel to the first fluid line system (16), and
**in that** the second fluid line system (21) has a fluid line portion which runs outside the dummy body (2) and along which the fluidic interface (22) is arranged.

10. A system for the practical training of resuscitation measures with a resuscitation dummy (1) according to any one of claims 1 to 9,
**characterised in that** a diagnostic ultrasound probe is provided, the ultrasound waves of which are able to propagate through the body that can be physically examined sonographically and punctured and are able to detect the arterial and/or venous fluid line portion (17, 18, 19, 20), and
**in that**, by means of a puncture needle, the detected fluid line portion can be punctured through the body that can be physically examined sonographically and punctured.

11. A system for the practical training of resuscitation measures with a resuscitation dummy (1) according to any one of claims 3 to 9,
**characterised in that** a detector is provided for detecting the electrically, magnetically or electromagnetically detectable unit, and
**in that** the detector is connected indirectly or directly to an output unit for the visual, acoustic and/or haptically perceptible representation of information transmitted between the detector and the detectable unit.

## Revendications

1. Mannequin de réanimation (1), destiné à l'entraînement pratique à des actions de réanimation cardiopulmonaire, doté d'un corps de mannequin (2) reproduisant le tronc de l'être humain, dans lequel est placé un premier système de conduites (16) de fluide, qui reproduit de manière schématisée le système sanguin de l'être humain et qui comprend des segments (17, 18, 19, 20) de conduites de fluide artériel et veineux, affectables à l'abdomen et l'aine (3) de l'être humain, qui sont fluidiquement reliés avec une pompe, la pompe (20) étant une pompe mécanique, actionnable manuellement, qui est placée à l'intérieur du corps du mannequin (2), qui est conçu en une ou en plusieurs parties, dans la zone du sternum (7) de l'être humain, qui est élastiquement déformable dans cette zone, et une tête de mannequin (4) reproduisant la tête de l'être humain, dotée d'un orifice (5) conçu à la manière d'une bouche, qui est fluidiquement relié avec un sachet reproduisant les poumons de l'être humain étant montée sur le corps de mannequin (2),
**caractérisé en ce que** le corps de mannequin (2) prévoit dans la zone de l'abdomen supérieur, ainsi que dans la zone de l'aine (3) gauche et / ou droite de l'être humain chaque fois un orifice (12, 13, 14), sous lequel s'écoule chaque fois par endroits au moins le segment (117, 18, 19, 20) de conduites de fluide artériel ou veineux et dans lequel est placé un corps (9, 10, 11) physiquement susceptible d'être exposé à un son et à une ponction et
**en ce que** le premier système de conduites (16) de fluide et la pompe (15) sont fluidiquement reliés avec un deuxième système (21) de conduites de fluide, le long duquel est placée au moins une interface (22) fluidique, sur laquelle est reliée une unité de commande et / ou de régulation (24) fluidique, destinée à prédéfinir et / ou à faire varier une pression absolue et / ou pulsatoire d'une circulation de fluide à l'intérieur du premier système de conduites (16) de fluide.

2. Mannequin de réanimation selon la revendication 1, **caractérisé en ce qu'**au moins dans la zone de l'un des orifices (12, 13, 14) est implantée à l'intérieur du corps du mannequin (2) une unité détectable par moyen électrique, magnétique ou électromagnétique.

3. Mannequin de réanimation selon la revendication 2, **caractérisé en ce que** l'unité est une puce RFID, qui est détectable par une antenne RFID-manipulable en externe.

4. Mannequin de réanimation selon l'une quelconque des revendications 1 à 3, **caractérisé en ce que** le corps (9, 10, 11) physiquement susceptible d'être exposé à un son et à une ponction comporte du gel médical synthétique.

5. Mannequin de réanimation selon l'une quelconque des revendications 1 à 4, **caractérisé en ce que** les segments (17, 18, 19, 20) de conduites de fluide artériel et / ou veineux traversent le corps (9, 10, 11) physiquement susceptible d'être exposé à un son et à une ponction.

6. Mannequin de réanimation selon l'une quelconque des revendications 1 à 5, **caractérisé en ce qu'**avec un écart, le long du segment (17, 18, 19, 20) de conduites de fluide artériel et / ou veineux, deux accouplements fluidiques (27) sont placés l'un par rapport à l'autre de telle sorte, que le segment (17, 18, 19, 20) de conduites de fluide soit remplaçable par endroits dans la zone de l'un des orifices (12, 13, 14).

7. Mannequin de réanimation selon la revendication 6, **caractérisé en ce que** les accouplements fluidiques (27) sont reliés fixement ou fixement de manière amovible avec le corps de mannequin (2).

8. Mannequin de réanimation selon l'une quelconque des revendications 1 à 7, **caractérisé en ce que** la tête de mannequin (4) est montée fixement ou fixement et de manière désolidarisable sur le corps de mannequin (2) et
**en ce que** le sachet reproduisant les poumons de l'être humain s'étend dans la zone du sternum (7) à l'intérieur du corps du mannequin (2) et est englobé par celui-ci de manière limitante, de telle sorte que lors de la ventilation, une haptique réaliste concernant une résistance à la ventilation ainsi qu'une force de rappel en fonction d'une pression de remplissage soit reproductible à l'intérieur du sachet.

9. Mannequin de réanimation selon l'une quelconque des revendications 1 à 8, **caractérisé en ce que** le deuxième système (21) de conduites de fluide est indirectement ou directement relié fluidiquement avec la pompe (15), ainsi qu'à la parallèle du premier système de conduites (16) de fluide et
**en ce que** le deuxième système (21) de conduites de fluide comporte un segment de conduites de fluide s'écoulant à l'extérieur du corps du mannequin (2), le long duquel est placée l'interface (22) fluidique.

10. Système, destiné à l'entraînement pratique d'actions de réanimation cardiopulmonaire avec un mannequin de réanimation (1) selon l'une quelconque des revendications 1 à 9,
**caractérisé en ce qu'**il est prévu une tête à ultrasons diagnostique, dont les ondes ultrasonores sont aptes à retentir à travers le corps physiquement susceptible d'être exposé à un son et à une ponction et à détecter le segment (17, 18, 19, 20) de conduites de fluide artériel et / ou veineux et
**en ce qu'**au moyen d'une aiguille de ponction, le segment de conduites de fluide détecté est susceptible d'être ponctionné à travers le corps physiquement susceptible d'être exposé à un son et à une ponction.

11. Système, destiné à l'entraînement pratique d'actions de réanimation cardiopulmonaire avec un mannequin de réanimation (1) selon l'une quelconque des revendications 3 à 9,
**caractérisé en ce qu'**il est prévu un détecteur, destiné à détecter l'unité détectable par moyen électrique, magnétique ou électromagnétique et **en ce que** le détecteur est relié indirectement ou directement avec une unité d'édition, pour la représentation perceptible visuellement, acoustiquement et / ou haptiquement d'informations transmises entre le détecteur et l'unité détectable.
